# EUROPÄISCHE PATENTSCHRIFT

(11) **EP 1 318 886 B1**
(45) Veröffentlichungstag und Bekanntmachung des Hinweises auf die Patenterteilung: **14.12.2011**
(21) Anmeldenummer: 01974020.8
(22) Anmeldetag: 31.08.2001
(51) Int. Cl.: B23K 11/25, B23K 11/24

(54) **VORRICHTUNG UND VERFAHREN ZUR PARAMETERERMITTLUNG EINER SCHWEISSANLAGE**
DEVICE AND METHOD FOR DETERMINING PARAMETERS OF A WELDING SYSTEM
PROCEDE ET DISPOSITIF POUR DETERMINER LES PARAMETRES D'UNE INSTALLATION DE SOUDAGE

(30) Priorität: 01.09.2000 DE 10043070
(43) Veröffentlichungstag der Anmeldung: 18.06.2003
(73) Patentinhaber: ROBERT BOSCH GMBH, 70442 Stuttgart (DE)
(72) Erfinder: ARNDT, Volker, 64711 Erbach (DE); OFFTERDINGER, Klaus, 70619 Stuttgart (DE); PASDZIOR, Walter, 64625 Bensheim (DE)
(74) Vertreter: Thürer, Andreas
(86) Internationale Anmeldenummer: PCT/DE2001/003413
(87) Internationale Veröffentlichungsnummer: WO 2002/018088

(56) Entgegenhaltungen:
- EP-A- 0 284 177
- DE-A- 4 325 878
- US-A- 4 447 700
- US-A- 5 920 014
- MATSUYAMA K: "RECENT DEVELOPMENTS AND TRENDS IN QUALITY CONTROL TECHNOLOGY FOR RESISTANCE WELDING" WELDING INTERNATIONAL, WELDING INSTITUTE. ABINGTON, GB, Bd. 10, Nr. 9, 1996, Seiten 743-747, XP000621930 ISSN: 0950-7116
- NISHIDA Y ET AL: "IN-PROCESS CONTROL IN RESISTANCE WELDING" WELDING INTERNATIONAL, WELDING INSTITUTE. ABINGTON, GB, Bd. 10, Nr. 9, 1996, Seiten 748-752, XP000621931 ISSN: 0950-7116

## Beschreibung

### Stand der Technik

Die Erfindung geht aus von einer Vorrichtung und einem Verfahren gemäss dem Oberbegriff der Ansprüche 1 und 5.

Aus der DE-A 43 25 878 sind ein derartiges Verfahren und eine derartige Schweissvorrichtung bekannt. Um Schweißvorgänge online zu bewerten, wird die Ultraschalldurchlässitgkeit der Schweißverbindung bei der Beaufschlagung mit Scherwellen bestimmt. Hierzu wird während jeder Stromhalbwelle des Schweißstroms aus dem Ausgangssignal des Ultraschallempfängers innerhalb eines Zeitfensters, das gegenüber dem konstanten Ultraschall-Sendesignal um eine definierte Verzögerungszeit verzögert ist, die mittlere Ultraschallenergie ermittelt. Diese wird als Maß für die Güte der Schweißverbindungen herangezogen. Zur Regelung des Schweißprozesses kann der Verlauf der Ultraschalldurchlässigkeit mit einem vorgegebenen Musterverlauf verglichen werden, um bei einer Abweichung die Schweißparameter wie beispielsweise die Stromstärke entsprechend zu verändern, so dass die nachfolgenden Ultraschaßdurchlässigkeitswerte wieder mit dem Musterverlauf übereinstimmen.

Es ist Aufgabe der Erfindung, noch weitere für den Schweißvorgang relevante Parameter zu ermitteln, die einen Hinweis geben auf den Zustand der Schweißanlage. Insbesondere ist es wünschenswert, den Verschleiß einer Elektrode der Schweißanlage genau zu bestimmen, um diesen zur Anzeige zu bringen oder automatisch Wartungsintervalle der Elektroden anzugeben. Auch eine Berücksichtigung des Alterungsprozesses der Schweißelektrode in der Regelung sollte ermöglicht werden.

Diese Aufgabe wird durch die Merkmale der unabhängigen Ansprüche gelöst.

### Vorteile der Erfindung

Die erfindungsgemäße Vorrichtung zur Parameterermittlung einer Schweißanlage beaufschlagt unter Verwendung einer Uftraschallquelle einen Schweißbereich mit Ultraschallwellen, vorzugsweise mit Scherwellen. Eine Signalverarbeitung ermittelt bei einem ersten Schweißvorgang aus einem empfangenen Ultraschallsignal ein Maß für eine erste Ultraschalldurchlässigkeit des Schweißbereichs. Außerdem ermittelt sie aus einem bei einem weiteren Schweißvorgang empfangenen Ultraschallsignal ein Maß für eine weitere Ultraschalldurchlässigkeit des Schweißbereichs. Das Maß für die erste Uttraschalldurchlässigkeit und die weitere Ultraschalldurchtässigkeit werden gespeichert zur Ansteuerung einer Anzeige und/oder einer Diagnosefunktion und/oder zur Korrektur von Ansteuergrößen der Schweißanlage. Es hat sich herausgestellt, dass sich das Maß für die Ultraschalldurchlässigkeit mit zunehmenden Schweißvorgängen charakteristisch verändert. Dies resultiert aus einem Verschleiß der Elektroden bzw. der Elektrodenkappen. Mit zunehmender Schweißdauer erhöht sich die Ultraschalldurchlässigkeit des Schweißbereichs. Diese Kenntnis wird durch die Abspeicherung zumindest zweier korrespondierender Ultraschalldurchlässigkeitswerte und anschließender Bewertung berücksichtigt. Damit wird es erfindungsgemäß möglich, während des laufenden Schweißvorgangs anhand der sich ändernden Ultraschalldurchlässigkeit sofort auf den Zustand der Elektroden beziehungsweise derElektrodenkappen zu schließen. Damit können Wartungs- beziehungsweise Inspektionsintervalle unterbleiben, in denen herkömmlicherweise der Zustand der Elektroden in Augenschein genommen wird.

In einer zweckmäßigen Weiterbildung wird die von der Anzahl der Schweißungen abhängende Ultraschalldurchlässigkeit oder eine davon abhängende Größe mit einem Grenzwert verglichen, bei dessen Überschreiten dem Benutzer ein Hinweis gegeben wird, dass die Elektrode beziehungsweise die Elektrodenkappe einer Wartung zu unterziehen ist. So muss beispielsweise die Elektrodenkappe entweder komplett erneuert oder beispielsweise abgefräst werden. Damit kann die Überwachung der Schweißvorrichtung automatisch durch die Signalerfassung durchgeführt werden. Die Vorrichtung gibt selbständig den Hinweis, wann der Benutzer einzugreifen hat. Außerdem kann automatisch ein Steuersignal generiert werden, mit dem eine automatische Wartungsfunktion aktiviert wird. So startet beispielsweise eine automatische Fräsanlage selbsttätig den Abfräsvorgang der abgenutzen Elektrodenkappen beziehungsweise Elektroden. Der Fertigungsprozeß kann dadurch weiter optimiert werden, indem eine bedarfsgerechte Aktivierung der Wartungsfunktion möglich ist.

Anhand der Elektrodenverschleißkurve kann auch die Stromregelung des Widerstandsschweißprozesses beeinflusst werden. Vorzugsweise sollte mit zunehmenden Schweißvorgängen der Strom im selben Verhältnis wie die Ultraschalldurchlässigkeitszunahme erhöht werden. Damit wird erreicht, dass die Stromdichte durch den Schweißbereich konstant gehalten wird, was zu gleichbleibender Qualität der Schweißung beiträgt. Diese Stromnachstellung kann ständig vorgenommen werden, wodurch automatisch auch bei zunehmendem Verschleiß der Elektroden bzw. Elektrodenkappen eine gleichbleibend hohe Qualität des Schweißungen und der sich ergebenden Schweißpunkte erreicht wird.

In einer zweckmäßigen Weiterbildung werden die ermittelten Ultraschalldurchlässigkeitswerte einem bestimmten Glättungsverfahren unterzogen, um daraus eine Trendkennlinie zu ermitteln. Damit führen einzelne Messwertausreißer nicht schon zu einer fälschlichen Aktivierung der Wartungsanzeige.

Weitere zweckmäßige Weiterbildungen ergeben sich aus weiteren abhängigen Ansprüchen und aus der Beschreibung.

Ein Ausführungsbeispiel der Erfindung ist in der Zeichnung dargestellt und wird im Folgenden näher beschrieben.

Es zeigen
die Figur 1 ein Blockschaltbild der erfindungsgemäßen Vorrichtung,
die Figuren 2a, 2b die Ultraschallsender- beziehungsweise -empfängersignale,
die Figuren 3a bis 3c zugehörige Trigger- und Stromverläufe mit zugehöriger Ultraschalldurchlässigkeit,
die Figur 4 charakteristische Ultraschalldurchlässigkeitsverläufe in Abhängigkeit von der Anzahl der Schweißpunkte beziehungsweise Schweißungen sowie
die Figuren 5a und 5b Verläufe der Ultraschalldurchlässigkeit, der Ultraschalldurchlässigkeits-Trendkennlinie und des Stroms in Abhängigkeit von der Anzahl der Schweißungen.

### Beschreibung des Ausführungsbeispiels

Eine erste Schweißelektrode 11 wird mit einem Strom I beaufschlagt. An der ersten Schweißelektrode 11 ist ein Ultraschallsender 14 angeordnet. An der Außenwand einer zweiten Schweißelektrode 12 ist ein Ultraschallempfänger 16 angebracht. Am Ende der ersten Schweißelektrode 11 sitzt eine erste Elektrodenkappe 19, am Ende der zweiten Schweißelektrode 12 eine zweite Elektrodenkappe 20. Zwischen den beiden Elektrodenkappen 19, 20 befinden sich ein erstes Blech 21 und ein zweites Blech 22, die durch einen Schweißpunkt 18 verbunden werden. Der Ultraschallsender 14 wird mit einem Sendesignal US beaufschlagt, das eine Senderansteuerung 24 in Abhängigkeit von einem Triggersignal Trig einer Schweißsteuerung 28 bereitstellt. Das Sendesignal US wird über die erste Elektrode 11, die erste Elektrodenkappe 19, das erste und zweite Blech 21, 22, den Schweißpunkt 18, die zweite Elektrodenkappe 20 und über die zweite Elektrode 12 zu dem Ultraschallempfänger 16 geführt.
Der Ultraschallempfänger 16 gibt ein Messsignal UE an eine Signalerfassung 26 ab. Die Signalerfassung 26 leitet das erfasste Messsignal UE an eine Signalverarbeitung 30 weiter.

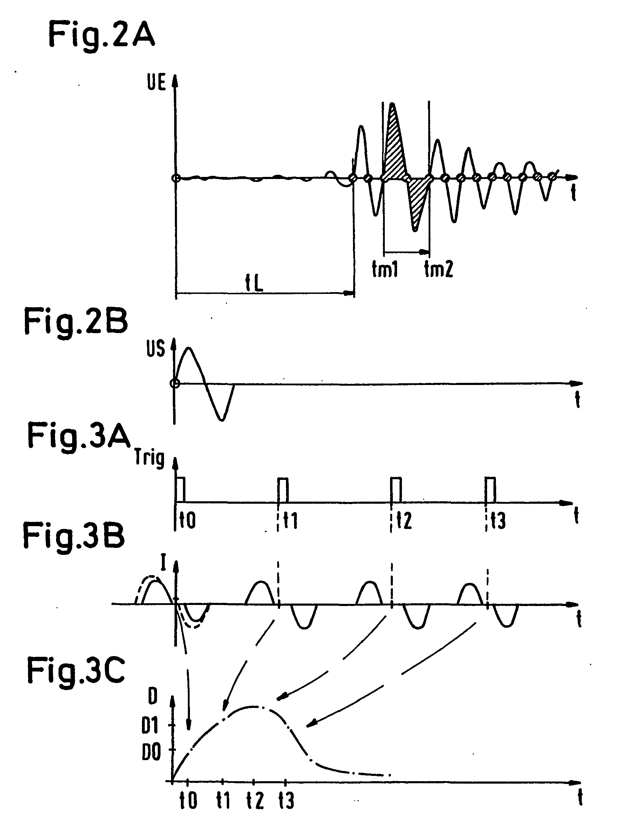

Die Figur 2a zeigt den zeitlichen Verlauf des Messsignals UE. Zum Zeitpunkt t0 gibt der Ultraschallsender 14 ein Sendesignal US ab, das eine Sinusschwingung beinhaltet (Figur 2b). Nach der Laufzeit tI erfasst der Ultraschallempfänger 16 das Messsignal UE, dessen Amplitude der Sinusschwingung zuerst zu-, dann jedoch wieder betragsmäßig abnimmt und ausschwingt. Innerhalb eines Messfensters mit den Parametern TM1 und TM2 wird das
Messsignal UE ausgewertet.

Im Normalbetrieb wird die Widerstandsschweißanlage mit einem lückenden, Sinushalbwellen aufweisenden Strom I beaufschlagt (Figur 3b). Die Stromstärke I lässt sich, wie gestrichen angedeutet, durch eine Veränderung der Stellgröße beeinflussen. Abhängig von dem Stromverlauf I gemäß Figur 3b ergibt sich der Verlauf des Triggersignals Trig. Das Triggersignal Trig ist hierbei so gewählt, dass gerade dann eine Messung durch Aussenden des Sendesignals US gestartet wird, wenn kein Strom I fließt. In Figur 3c ist die Ultraschalldurchlässigkeit D in Abhängigkeit von der Zeit t dargestellt. Für eine gute Schweißung weist die Ultraschalldurchlässigkeitskurve D den skizzierten Verlauf auf. Nur solche Messwerte tragen zur Bestimmung der Ultraschalldurchlässigkeit D bei, die innerhalb des Messfensters TM1, TM2 liegen. Ein Aussenden des Sendesignals US wird durch das Triggersignal Trig aktiviert.

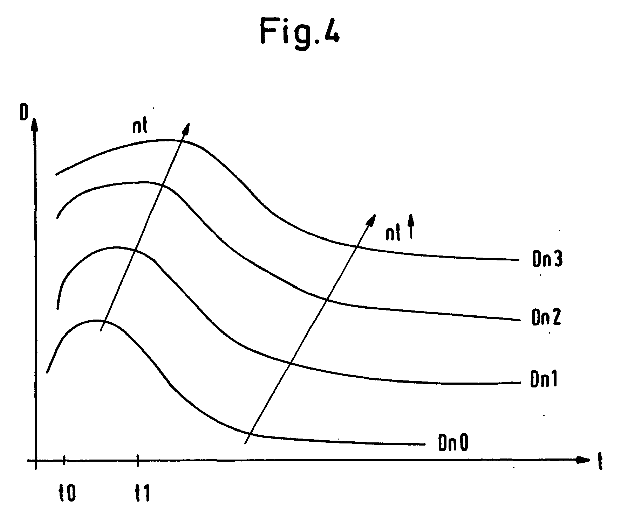

Die Ultraschalldurchlässigkeitskurve D gemäß Figur 3c ändert sich mit Zunahme der Anzahl n der Schweißpunkte beziehungsweise der Schweißungen. Die Ultraschalldurchlässigkeit D nimmt mit zunehmender Anzahl n der Schweißpunkte zu, wie in Figur 4 dargestellt.

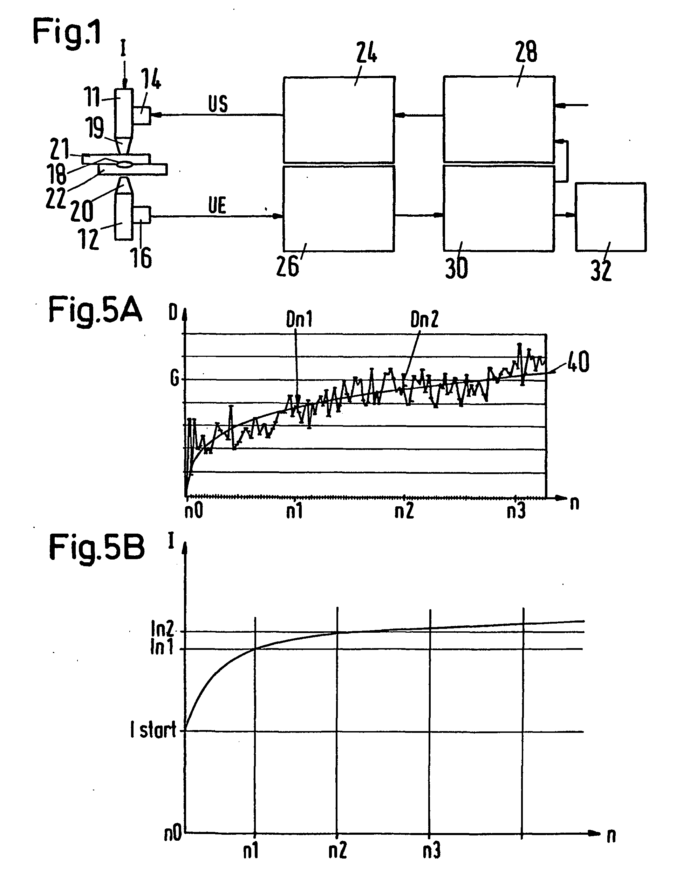

Gemäß Figur 5a werden in Abhängigkeit von der Anzahl n der Schweißungen beziehungsweise Schweißpunkte die Maße für die Ultraschalldurchlässigkeitswerte Dn angetragen. Durch mathematische Glättungsverfahren wird aus diesen Messwerten die Trendkennlinie 40 bestimmt. Der Verlauf des Stroms I in Abhängigkeit von der Anzahl n der Schweißpunkte beziehungsweise Schweißungen stimmt im Wesentlichen mit der Trendkennlinie 40 überein, Figur 5b.

Erfindungsgemäß wird nun die Ultraschalldurchlässigkeit D bei unterschiedlichen Schweißvorgängen ausgewertet zur Ermittlung des Verschleißes der Elektroden 11, 12 oder der Elektrodenkappen 19, 20. Die Ultraschalldurchlässigkeit D nimmt mit zunehmender Schweißdauer bzw. mit zunehmender Anzahl der Schweißungen durch eine Abflachung der Elektrodenkappen 19, 20 zu.

Anhand der Figuren 1 bis 3 wird nachfolgend beschrieben, wie die Ultraschalldurchlässigkeitskurve D für eine Schweißung ermittelt wird. Der Messvorgang des Schweißprozesses beginnt zum Zeitpunkt t0. Die Schweißsteuerung 28 gibt zu dem Zeitpunkt t0 einen Triggerimpuls Trigg an die Senderansteuerung 24, die daraufhin den Ultraschallsender 14 zum Aussenden mit dem in Figur 2b dargestellten Sendesignal US veranlasst. Der Ultraschallsender 14 erzeugt Scherwellen, vorzugsweise transversale Ultraschallwellen oder Torsionsschallwellen. Das vom Sender 14 ausgesendete Signal US gelangt über den Schweißbereich 18, 21, 22, die Elektroden 11, 12 sowie die Elektrodenkappen 19, 20 an den Ultraschallempfänger 16, der das Messsignal..:UE empfängt und an die Signalerfassung 26 weiterleitet. Der Signalverlauf des Messsignals UE ist in Figur 2a dargestellt. Aus dem Messsignal UE ermitteln die Signalerfassung 26 und die Signalverarbeitung 30 die Ultraschalldurchlässigkeit D zum (Trigger-) Zeitpunkt t0. Zur Bestimmung der Ultraschalldurchlässigkeit D des Schweißbereichs während jeder Stromhalbwelle des Schweißstroms wird die mittlere Ultraschallenergie des Messsignals UE innerhalb eines geeigneten Zeitfensters TM1, TM2 bestimmt. Ein Maß für die Ultraschallenergie ist die von dem Messsignal UE eingeschlossene Fläche, in Figur 2a schraffiert dargestellt. So könnte beispielsweise der Effektivwert oder das arithmetische Mittel des innerhalb des Messfensters TM1, TM2 liegenden Kurvenverlaufs des Messsignals UE berechnet werden als Maß für die Ultraschalldurchlässigkeit D zum Zeitpunk t0. Dies wiederholt sich für eine einzige Schweißung entsprechend oft, um den in Figur 3c gezeigten Kurvenverlauf zu erhalten. Der Schweißbereich 18, 21, 22 wird mit dem in Figur 3b dargestellten Stromverlauf I beaufschlagt.. Während dieses einen Schweißvorgangs werden erneut die Ultraschalldurchlässigkeiten zu den Zeitpunkten t1, t2, t3 usw. nach dem gerade beschriebenen Verfahren ermittelt. Mit Auftreten eines Triggersignals wird erneut ein Sendesignal US, wie in Figur 2b dargestellt, ausgesendet, woran sich die in Verbindung mit Figur 2a beschriebene Ultraschalldurchlässigkeitsermittlung anschließt. Für eine ordnungsgemäße Punktschweißung ergibt sich somit der in Figur 3c dargestellte charakteristische Verlauf der Ultraschalldurchlässigkeit. Mit zunehmenden Aufschmelzen des Schweißbereichs steigt die Ultraschalldurchlässigkeit D auf einen Maximalwert an. Wird nun der Schweißbereich flüssig, werden die Scherwellen abgeschwächt, so dass die Ultraschalldlurchlässigkeit wieder abnimmt. Zur ausführlicheren Beschreibung sei auf die DE-A 43 25 878 verwiesen.

In Figur 4 sind nun in Abhängigkeit von der Anzahl der Schweißungen die Ultraschalldurchlässigkeitskurven Dn0, Dn1, Dn2, Dn3 dargestellt. Mit zunehmender Anzahl n (n0 < n1 < n2 < n3) der Schweißungen nimmt auch die entsprechende Ultraschalldurchlässigkeitsamplitude zu übereinstimmenden Zeitpunkten t0, t1 zu, wenn die Anzahl n der Schweißungen mit denselben, dem Verschleiß unterliegenden Elektrodenkappen 19, 20 bzw. Elektroden 11, 12 durchgeführt wird. Im Wesentlichen lässt sich eine Zunahme der Amplitude der Ultraschalldurchlässigkeitskurve D mit zunehmender Anzahl n der Schwei-βungen sowie eine Verschiebung das Maximums der Ultraschalldurchlässigkeitskurve D feststellen.

Diese Änderung der Ultraschalldurchlässigkeit D mit zunehmender Anzahl n der Schwei-βungen ist somit ein Maß für den Verschleiß der Elektrode 11, 12 oder der Elektrodenkappen 19, 20. Verschleißende Elektrodenkappen 19, 20 verbreitern sich mit zunehmender Anzahl n der Schweißungen immer mehr, weshalb die Ultraschallwellen leichter den Schweißbereich passieren können. Dieses Phenomen macht man sich nun zunutze, um den Verschleiß der Schweißanlage zu erkennen und geeignete Gegenmaßnahmen einzuleiten.

Nachfolgend wird davon ausgegangen, dass mit denselben Elektroden 11, 22 und den entsprechenden Elektrodenkappen 19, 20 eine bestimmte Anzahl n von Schweißungen, vorzugsweise Punktschweißungen, durchgeführt werden soll. Zunächst wird nun ein Maß für die Ultraschalldurchlässigkeit D bestimmt. Hierzu wird beispielsweise beginnend mit der ersten Schweißung n0 zu einem vorher festgelegten Zeitpunkt t0 oder t1 die zugehörige Ultraschalldurchlässigkeit DnO(t0), DnO(t1) ermittelt, wie vorstehend beschrieben. Diese Ermittlung wird auch bei den nachfolgenden Schweißungen n1, n2, n3 mit derselben Elektrode 11, 12 bzw. denselben Elektrodenkappen 19, 20 durchgeführt, und zwar zu demselben Zeitpunkt t0, t1 wie bei der vorangegangenen Messung. Daraus ergeben sich Messwerte der Ultraschalldurchlässigkeit wie in Figur 5a dargestellt. Die so ermittelten Messwerte der Ultraschalldurchlässigkeit Dn in Abhängigkeit von der Anzahl n der Schweißungen werden nun einem Glättungsverfahren unterzogen. Hierbei kann es sich beispielsweise um die Methode der kleinsten Quadrate handeln, wobei sich eine Trendkennlinie 40 nach der Formel y=c x^{b} ergibt (y entspricht der Trendkennlinie, x der Ultraschalldurchlässigkeit Dn, sowie c und b bestimmte Prozessparameter). Diese Trendkennlinie 40 ist ebenfalls in Figur 5a dargestellt. Anhand der Trendkennlinie 40 erkennt man eine sich verlangsamende Zunahme der Ultraschalldurchlässigkeit D in Abhängigkeit von der Anzahl n der Schweißungen. Aus den immer neu hinzukommenden Messwerten für die Ultraschalldurchlässigkeit D wird immer eine aktualisierte neue Trendkennlinie 40 ermittelt.

Neben dieser zeitpunktabhängigen Ermittlung eines Maßes für die Ultraschalldurchlässigkeit Dn könnte auch das Maximum der jeweiligen Ultraschalldurchlässigkeit Dn gespeichert werden zur Ermittlung der Trendkennlinie. Als Maß für die Ultraschalldurchlässigkeit Dn könnte auch die von der jeweiligen Durchlässigkeitskurve eingeschlossene Fläche dienen, die mit bestimmten mathematischen Verfahren zu ermitteln ist. Ein Maß für die Ultraschalldurchlässigkeit Dn könnten auch beispielsweise die vier Amplituden der Ultraschalldurchlässigkeit Dn(t0), Dn(t1), Dn(t2), Dn(t3) gemäß Figur 3c abgeben, die beispielsweise addiert oder arithmetisch gemittelt werden. Die Art der Ermittlung eines Maßes für die Ultraschalldurchlässigkeit soll für jede Schweißung beibehalten werden, um die Vergleichbarkeit der Maße für die Ultraschalldurchlässigkeiten Dn in Abhängigkeit von der Anzahl n der Schweißungen zu gewährleisten. Die Weiterverarbeitung zur Trendkennlinie 40 läuft ab wie bereits beschrieben.

Diese Trendkennlinie 40 wird ständig mit einem vorgebbaren Grenzwert G verglichen. Überschreitet die Trendkennlinie 40 den Grenzwert G, so deutet dies auf einen so hohen Verschleiß der Elektroden 11,12 beziehungsweise der Elektrodenkappen 19, 20 hin, bei dem eingegriffen werden muss. Die Signalverarbeitung 30 übernimmt die entsprechende Auswertung der Ultraschalldurchlässigkeit D und die Erstellung der Trendkennlinie 40. Sie steuert eine Anzeige 32 entsprechend an. Überschreitet die Trendkennlinie 40 den Grenzwert G, so wird eine Warnmeldung aktiviert. So wird der Benutzer darauf aufmerksam gemacht, dass die Elektrodenkappen 19, 20 oder die Elektroden 11, 12 ausgetauscht oder in irgendeiner Form bearbeitet werden müssen. So könnten beispielsweise die Elektrodenkappen 19, 20 wieder neu abgefräst werden, um sie für weitere Schweißvorgänge zu verwenden.

Überschreitet die Trendkennlinie 40 den Grenzwert G, erzeugt die Signalverarbeitung 30 ein Steuersignal. Dieses Steuersignal kann beispielsweise dazu genutzt werden, eine automatische Wartungsfunktion zu aktivieren. So startet eine automatische Fräsanlage den Abfräsvorgang der abgenutzen Elektrodenkappen beziehungsweise Elektroden. Auch könnte ein automatischer Elektroden- oder Elektrodenkappenwechsel aktiviert werden. Eine bedarfsgerechte Steuerung solcher Funktionen wird damit ermöglicht.

Um eine gleichbleibende Qualität der Schweißungen zu erreichen, sollte die Stromdichte durch den Schweißbereich 18, 21, 22 konstant gehalten werden. Da sich die Spitzen der Elektrodenkappen 19, 20 verbreitern, würde bei einem konstanten Strom I die Stromdichte mit zunehmender Anzahl n der Schweißungen zurückgehen. Da jedoch nun Aussagen über den Verschleiß der Elektrodenkappen 19, 20 in Form der Trendkennlinie 40 zur Verfügung stehen, kann der Strom I in Abhängigkeit von dieser Trendkennlinie 40 verändert werden. Der Stromverlauf I sollte einen im wesentlichen parallelen Verlauf zu der Trendkennlinie 40 aufweisen, um die Stromdichte durch den Schweißbereich 18, 21, 22 konstant zu halten. Hierzu ist der Strom I entsprechend nachzuführen.
Soll beispielsweise der neue Strom In2 für die Anzahl n2 der Schweißungen neu eingestellt werden, so könnte dies anhand der folgenden Gleichung erfolgen: In2=FxDn2/Dnl x In1, wobei Dn1, Dn2 die entsprechenden Ultraschalldurchlässigkeitswerte der Trendkennlinie 40 zu der jeweiligen Anzahl n1, n2 der Schweißungen sind, sowie In1 der Stromwert, mit dem die Anlage bei der Anzahl n1 der Schweißungen beaufschlagt wurde, sowie F ein Proportionalitatsfaktor. Auf diese Art und Weise könnte der neu einzustellende Stromwert schrittweise nachgeführt werden.

## Patentansprüche

1. Schweißvorrichtung mit einer Einrichtung, die zur Bewertung des Zustandes der Elektroden (11, 12) oder der Elektrodenkappen (19, 20) der Schweißvorrichtung unter Verwendung eines Ultraschallquelle (14), durch die ein Schweißbereich (18, 21, 22) mit Ultraschallwellen beaufschlagbar ist, eingerichtet ist, mit einer Signalverarbeitungseinrichtung (30), die dafür eingerichtet ist, bei einem ersten Schweißvorgang (n1) aus einem empfangenen Ultraschallsignal (UE) ein Maß für eine erste Ultraschalldurchlässigkeit (Dn1) des Schweißbereichs (18, 21, 22) zu ermitteln, und bei zumindest einem späteren Schweißvorgang (n2) und erneuter Durchschallung des Schweißbereichs (18, 21, 22) mit Ultraschallwellen aus dem im Rahmen des späteren Schweißvorgangs (n2) empfangenen Ultraschallsignal (UE) ein Maß für zumindest eine zweite Ultraschalldurchlässigkeit (Dn2) zu ermitteln, **dadurch gekennzeichnet, dass** die Signalverarbeitungseinrichtung (30) dafür eingerichtet ist, auf Grundlage des ersten und/oder des zumindest einen zweiten Maßes der Ultraschalldurchlässigkeit den Zustand der Elektroden (11, 12) oder der Elektrodenkappen (19, 20) zu bewerten und aufgrund der Bewertung eine Ansteuerung einer Anzeige (32) und/oder eine Aktivierung einer Diagnose- und/oder Wartungsfunktion und/oder eine Korrektur von Ansteuergrößen (In1, In2) der Schweißanlage vorzunehmen.

2. Vorrichtung nach Anspruch 1, **dadurch gekennzeichnet, dass** aus dem Maß für die erste Ultraschalldurchlässigkeit (Dn1) und dem Maß für die zumindest eine zweite Ultraschalldurchlässigkeit (Dn2) eine Trendkennlinie (40) ermittelbar ist.

3. Vorrichtung nach einem der vorhergehenden Ansprüche, **dadurch gekennzeichnet, dass** Vergleichsmittel (30) vorgesehen sind, die dafür eingerichtet sind, ein Maß für eine Ultraschalldurchlässigkeit (Dn1, Dn2) und/oder die Trendkennlinie (40) mit einem vorgebbaren Grenzwert (G) zu vergleichen.

4. Vorrichtung nach einem der vorhergehenden Ansprüche, **dadurch gekennzeichnet, dass** die korrigierte Ansteuergröße ein Strom (In2) zur Ansteuerung der Schweißanlage ist.

5. Verfahren zur Bewertung des Zustandes der Elektroden (11, 12) oder der Elektrodenkappen (19, 20) einer Schweißanlage unter Verwendung einer Ultraschallquelle, die den Schweißbereich (18, 21, 22) mit Ultraschallwellen, vorzugsweise mit Scherwellen, beaufschlagt, wobei bei einem ersten Schweißvorgang (n1) der Schweißbereich (18, 21, 22) mit Ultraschallwellen (US) durchschallt wird, das über einen Ultraschallempfänger (16) empfangene Ultraschallsignal (UE) erfasst und daraus ein Maß für eine erste Ultraschalldurchlässigkeit (Dn1) ermittelt wird, wobei bei einem späteren Schweißvorgang (n2) der Schweißbereich (18, 21, 22) erneut mit Ultraschallwellen (US) beaufschlagt wird und aus dem empfangenen Ultraschallsignal (UE) ein Maß für eine zweite Ultraschalldurchlässigkeit (Dn2) ermittelt wird, wobei in Abhängigkeit von der ersten Ultraschalldurchlässigkeit (Dn1) und/oder der zumindest zweiten Ultraschalldurchlässigkeit (Dn2) eine Bewertung des Zustandes der Elektroden (11, 12) oder der Elektrodenkappen (19, 20) vorgenommen wird, und ferner aufgrund der Bewertung ein Steuersignal gebildet wird und/oder zumindest eine Ansteuergröße (In2) der Schweißanlage verändert wird.

6. Verfahren nach dem vorhergehenden Anspruch, **dadurch gekennzeichnet, dass** aus dem Maß für die erste Ultraschalldurchlässigkeit (Dn1) und dem Maß für die zumindest zweite Ultraschalldurchlässigkeit (Dn2) eine Trendkennlinie (40) ermittelt wird.

7. Verfahren nach einem der Ansprüche 5 oder 6, **dadurch gekennzeichnet, dass** die Trendkennlinie (40) nach der Methode der kleinsten Quadrate ermittelt wird.

8. Verfahren nach einem der vorhergehenden Ansprüche 5 bis 7, **dadurch gekennzeichnet, dass** ein Maß für eine Ultraschalldurchlässigkeit (Dn1, Dn2) und/oder die Trendkennlinie (40) mit einem Grenzwert (G) verglichen wird, wobei beim Überschreiten des Grenzwerts (G) ein Warnhinweis und/oder eine Wartungsfunktion aktiviert und/oder eine Korrektur einer Ansteuergröße vorgenommen wird.

9. Verfahren nach einem der vorhergehenden Ansprüche 5 bis 8, **dadurch gekennzeichnet, dass** in Abhängigkeit von dem Maß für die erste Ultraschalldurchlässigkeit (Dn1) und dem Maß für die zumindest eine zweite Ultraschalldurchlässigkeit (Dn2) als korrigierte Ansteuergröße ein Strom (In2) zur Ansteuerung der Schweißanlage eingestellt wird.

## Claims

1. Welding jig with a device designed for assessing the state of the electrodes (11, 12) or the electrode caps (19, 20) of the welding jig by using an ultrasound source (14), by which a welding area (18, 21, 22) can be subjected to ultrasonic waves, with a signal processing device (30), which is designed for determining during a first welding operation (n1) a measure of a first ultrasound permeability (Dn1) of the welding area (18, 21, 22) from a received ultrasound signal (UE) and determining during at least one later welding operation (n2) and renewed exposure of the welding area (18, 21, 22) to the transmission of ultrasonic waves a measure of at least one second ultrasound permeability (Dn2) from the ultrasound signal (UE) received in the course of the later welding operation (n2), **characterized in that** the signal processing device (30) is designed for assessing the state of the electrodes (11, 12) or the electrode caps (19, 20) on the basis of the first and/or the at least one second measure of the ultrasound permeability and, on the basis of the assessment, actuating a display (32) and/or activating a diagnostic and/or servicing function and/or correcting actuating variables (In1, In2) of the welding system.

2. Jig according to Claim 1, **characterized in that** a trend characteristic (40) can be determined from the measure of the first ultrasound permeability (Dn1) and the measure of the at least one second ultrasound permeability (Dn2).

3. Jig according to one of the preceding claims, **characterized in that** comparing means (30) are provided, designed for comparing a measure of an ultrasound permeability (Dn1, Dn2) and/or the trend characteristic (40) with a predeterminable limit value (G).

4. Jig according to one of the preceding claims, **characterized in that** the corrected actuating variable is a current (In2) for actuating the welding system.

5. Method for assessing the state of the electrodes (11, 12) or the electrode caps (19, 20) of a welding system using an ultrasound source which subjects the welding area (18, 21, 22) to ultrasound waves, preferably to shear waves, wherein, during a first welding operation (n1), the welding area (18, 21, 22) is exposed to the transmission of ultrasonic waves (US), the ultrasound signal (UE) received by way of an ultrasound receiver (16) is sensed and a measure of a first ultrasound permeability (Dn1) is determined from it, wherein, during a later welding operation (n2), the welding area (18, 21, 22) is exposed again to ultrasound waves (US) and a measure of a second ultrasound permeability (Dn2) is determined from the received ultrasound signal (UE), wherein an assessment of the state of the electrodes (11, 12) or the electrode caps (19, 20) is performed in dependence on the first ultrasound permeability (Dn1) and/or the at least one second ultrasound permeability (Dn2), and furthermore a control signal is formed and/or at least one actuating variable (In2) of the welding system is changed on the basis of the assessment.

6. Method according to the preceding claim, **characterized in that** a trend characteristic (40) is determined from the measure of the first ultrasound permeability (Dn1) and the measure of the at least one second ultrasound permeability (Dn2).

7. Method according to either of Claims 5 and 6, **characterized in that** the trend characteristic (40) is determined by the method of least squares.

8. Method according to one of the preceding Claims 5 to 7, **characterized in that** a measure of an ultrasound permeability (Dn1, Dn2) and/or the trend characteristic (40) is compared with a limit value (G), a warning signal and/or a warning function being activated and/or a correction of an actuating variable being performed if the limit value (G) is exceeded.

9. Method according to one of the preceding Claims 5 to 8, **characterized in that** a current (In2) for actuating the welding system is set as a corrected actuating variable in dependence on the measure of the first ultrasound permeability (Dn1) and the measure of the at least one second ultrasound permeability (Dn2).

## Revendications

1. Ensemble de soudage présentant
un dispositif prévu pour évaluer l'état des électrodes (11, 12) ou des capuchons d'électrode (19, 20) de l'ensemble de soudage par recours à une source (14) d'ultrasons qui permet d'appliquer des ondes ultrasoniques sur une zone de soudage (18, 21, 22),
un dispositif (30) de traitement de signal prévu pour déterminer pour une première opération de soudage (n1) et à partir d'un signal ultrasonique reçu (UE) une mesure d'une première perméabilité (Dn1) aux ultrasons de la zone de soudage (18, 21, 22) et pour déterminer pour au moins une opération de soudage (n2) ultérieure, une nouvelle application d'ondes ultrasoniques sur la zone de soudage (18, 21, 22) et à partir du signal ultrasonique (UE) reçu dans le cadre de l'opération ultérieure de soudage (n2) une mesure d'au moins une deuxième perméabilité (Dn2) aux ultrasons,
**caractérisé en ce que**
le dispositif (30) de traitement de signal est conçu pour évaluer l'état des électrodes (11, 12) ou des capuchons d'électrode (19, 20) et à partir de la première mesure et/ou de la ou des deuxièmes mesures de la perméabilité aux ultrasons, commander sur base de l'évaluation un affichage (32) et/ou l'activation d'une fonction de diagnostic, d'une fonction d'entretien et/ou d'une correction de grandeur de commande (In1, In2) de l'installation de soudage.

2. Dispositif selon la revendication 1, **caractérisé en ce qu'**une ligne caractéristique de tendance (40) peut être déterminée à partir de la mesure de la première perméabilité (Dn1) aux ultrasons et de la mesure de la ou des deuxièmes perméabilités (Dn2) aux ultrasons.

3. Dispositif selon l'une des revendications précédentes, **caractérisé en ce qu'**il présente des moyens de comparaison (30) conçus pour comparer une mesure de perméabilité (Dn1, Dn2) aux ultrasons et/ou la ligne caractéristique de tendance (40) à une valeur limite prédéterminée (G).

4. Dispositif selon l'une des revendications précédentes, **caractérisé en ce que** la grandeur de commande corrigée est le courant (In2) de commande de l'installation de soudage.

5. Procédé d'évaluation de l'état des électrodes (11, 12) ou des capuchons d'électrode (19, 20) d'une installation de soudage par recours à une source d'ultrasons qui applique des ondes ultrasoniques et de préférence des ondes de cisaillement sur la zone de soudage (18, 21, 22), la zone de soudage (18, 21, 22) étant traversée par des ondes ultrasoniques (US) lors d'une première opération de soudage (n1), le signal ultrasonique (UE) reçu par un récepteur (16) d'ultrasons étant saisi et une mesure d'une première perméabilité (Dn1) aux ultrasons en étant déterminée, des ondes ultrasoniques (US) étant de nouveau appliquées sur la zone de soudage (18, 21, 22) lors d'une opération ultérieure de soudage (n2) et une mesure d'une deuxième perméabilité (Dn2) aux ultrasons étant déterminée à partir du signal ultrasonique (UE) reçu, une évaluation de l'état des électrodes (11, 12) ou des capuchons d'électrode (19, 20) étant réalisée en fonction de la première perméabilité (Dn1) aux ultrasons et/ou de la ou des deuxièmes perméabilités (Dn2) aux ultrasons, un signal de commande étant en outre formé et/ou au moins une grandeur de commande (In2) de l'installation de soudage étant modifiée sur base de l'évaluation.

6. Procédé selon la revendication précédente, **caractérisé en ce qu'**une ligne caractéristique de tendance (40) est déterminée à partir de la mesure de la première perméabilité (Dn1) aux ultrasons et de la mesure de la ou des deuxièmes perméabilités (Dn2) aux ultrasons.

7. Procédé selon l'une des revendications 5 ou 6, **caractérisé en ce que** la ligne caractéristique de tendance (40) est déterminée par la méthode des moindres carrés.

8. Procédé selon l'une des revendications 5 à 7 qui précèdent, **caractérisé en ce qu'**une mesure de la perméabilité (Dn1, Dn2) aux ultrasons et/ou la ligne caractéristique de tendance (40) sont comparées à une valeur limite (G), une indication d'avertissement et/ou une fonction d'entretien étant activées et/ou une correction d'une grandeur de commande étant réalisée lorsque la valeur limite (G) est dépassée.

9. Procédé selon l'une des revendications 5 à 8 qui précèdent, **caractérisé en ce qu'**un courant (In2) de commande de l'installation de soudage est ajusté en fonction de la mesure de la première perméabilité (Dn1) aux ultrasons et de la mesure de la ou des deuxièmes perméabilités (Dn2) aux ultrasons, en tant que grandeur de commande corrigée.
